# EUROPÄISCHE PATENTSCHRIFT

(11) **EP 1 114 504 B1**
(45) Veröffentlichungstag und Bekanntmachung des Hinweises auf die Patenterteilung: **19.01.2011**
(21) Anmeldenummer: 99969186.8
(22) Anmeldetag: 09.09.1999
(51) Int. Cl.: H02K 41/03

(54) **LINEARFÜHRUNG**
LINEAR GUIDE
GUIDE LINEAIRE

(30) Priorität: 16.09.1998 DE 19842384
(43) Veröffentlichungstag der Anmeldung: 11.07.2001
(73) Patentinhaber: Schaeffler Technologies GmbH & Co. KG, 91074 Herzogenaurach (DE)
(72) Erfinder: BAALMANN, Klaus, D-66894 Wiesbach (DE); LUTZ, Peter, D-66877 Miesenbach (DE); RUFFING, Roland, D-66450 Bexbach (DE); RUDY, Dietmar, D-67655 Kaiserslautern (DE)
(86) Internationale Anmeldenummer: PCT/EP1999/006633
(87) Internationale Veröffentlichungsnummer: WO 2000/016468

(56) Entgegenhaltungen:
- FR-A- 2 704 993
- US-A- 4 641 065
- US-A- 5 073 734
- US-A- 5 598 043
- US-A- 5 668 421

## Beschreibung

### Gebiet der Erfindung

Die Erfindung betrifft eine Linearführung mit einem als Profilträger ausgebildeten Führungsgehäuse, welches ein Strangpreßprofilteil aus Aluminium ist, und mindestens einer darin befestigten Führungsschiene, an welcher einer oder mehrere Führungswagen längsverschieblich abgestützt sind, die jeweils mit einem teilweise außerhalb des Gehäuses befindlichen und sich durch eine Längsöffnung in das Gehäuse hineinerstreckenden Laufwagen verbunden sind, wobei die Linearführung innerhalb des Gehäuses einen Antrieb für die Längsverschiebung des Führungswagens und des Laufwagens aufweist, der als Elektromotor mit einem in dem Führungsgehäuse angeordneten Motorteil und einem in dem Laufwagen angeordneten Motorteil ausgebildet ist.

### Hintergrund der Erfindung

Angetriebene Linearführungen sind bisher hauptsächlich im Handling-Bereich eingesetzt worden. Neue Märkte und Anwendungen erschließen sich vor allem dann, wenn hohe Verfahrdynamik bei gleichzeitig hoher Positioniergenauigkeit (überschwingfreies Positionieren), einfacher Aufbau in bestehende Konstruktionen oder Konstruktionsprofile bzw. freitragender Einbau gefordert wird. Bei einem Kugelgewindetrieb wird zwar die geforderte Positioniergenauigkeit erreicht, jedoch ist im Vergleich zu einer mit Zahnriemen angetriebenen Linearführung die erreichbare Laufwagengeschwindigkeit durch die Grenzdrehzahl des Lagers und die stark längenabhängige kritische Drehzahl der Spindel auf niedrigere Werte begrenzt.

In umgekehrter Weise erreicht man bei einer mit Zahnriemen angetriebenen Linearführung hohe Verfahrgeschwindigkeiten bei gleichzeitig niedriger Positioniergenauigkeit. Bei hoher Beschleunigung und hoher Zyklenzahl macht sich bei diesem Antriebskonzept auch die geringe Steifigkeit gegenüber dem Kugelgewindetrieb nachteilig bemerkbar. Dies äußert sich in einen Überschwingen des Laufwagens an der anzufahrenden Position.

Aus dem Dokument DE 196 36 270 A1 ist eine Linearführungseinheit bekannt. Zum Verschieben des Laufwagens auf der Führungsschiene in deren Längsrichtung ist dort ein pneumatischer Linearantrieb vorgesehen, welcher einen in einer Bodenwand des Führungsgehäuses angeordneten, im Querschnitt elliptischen Zylinderraum umfaßt. In diesem ist ein Kolben geführt, der an beiden Stirnseiten mit je einem Antriebsstrang verbunden ist. Jeder Antriebsstrang führt über eine Umlenkrolle zu einer Stirnseite des Laufwagens. Daher erfolgt durch unterschiedliche Luftdruckbeaufschlagung der Arbeitsräume zu beiden Seiten des Kolbens dessen Verschiebung und damit eine entsprechende gegenläufige Verschiebung des Laufwagens. Der Nachteil einer solchen mit einem pneumatischen Antrieb ausgestatteten Linearführung besteht darin, daß hier ein hoher konstruktiver Aufwand erforderlich ist.

Das Dokument FR 2 704 993 zeigt eine mit einem elektrischen Linearantrieb versehene Linearführung, bei der in einem beispielsweise aus Aluminium hergestellten Profilträger mehrere angetriebene, mechanisch voneinander unabhängige Wagen über Rollen auf einer gemeinsamen Schiene abrollen können. Die Schiene ist hier an dem Profilträger einstückig angeformt. Durch fluchtende Schlitze der Schiene und des Profilträgers ragt ein jeweils als vertikale Platte ausgebildeter Wagen nach außen. An den dort befindlichen Laufwagenenden lassen sich beispielsweise Vorhänge oder Schiebetüren anhängen, die bewegt werden sollen. Maßnahmen zum Verschließen der freien Schlitzbereiche des Profilträgers, die sich jeweils zwischen den hintereinander angeordneten Wagen befinden, sind bei dieser Linearführung nicht vorgesehen.

### Zusammenfassung der Erfindung

Der Erfindung liegt die Aufgabe zugrunde, eine einfach aufgebaute, kostengünstig herstellbare, kompakte Linearführung zu schaffen.

Diese Aufgabe wird erfindungsgemäß dadurch gelöst, daß die Längsöffnung durch ein Abdeckband aus nichtrostendem magnetischen Stahl verschlossen ist, für welches Permanentmagnetstreifen in Nuten des Führungsgehäuses eingebracht sind. Infolge der

Verwendung eines Aluminiumstrangpreßprofils als Führungsgehäuse ergibt sich die Verbindung einer angetriebenen Linearführungseinheit mit einem gewichtsoptimierten, eigensteifen Trägerprofil.

Das Motorprimärteil kann in dem Laufwagen und das Motorsekundärteil in dem Führungsgehäuse angeordnet sein. Die Längsöffnung kann durch ein Abdeckband aus nichtrostendem magnetischen Stahl verschlossen sein, für welches Permanentmagnetstreifen in Nuten des Führungsgehäuses eingebracht sind.

Außer einem gezogenen Trägerprofil aus Aluminium mit einer oder mehreren integrierten Profilschienen kann die erfindungsgemäße Linearführung die folgenden Bauteile enthalten: ein Längenmeßsystem, einen oder mehrere Laufwagen mit Führungswagen, einen vom Trägerprofil umschlossenen Antrieb mittels Linearmotor, zwei Stirnplatten und eine Abdeckung in der Form eines korrosionsarmen Stahlbandes.

### Kurze Beschreibung der Zeichnung

Ausführungsbeispiele der Erfindung sind in der Zeichnung dargestellt und werden im folgenden näher beschrieben. Es zeigen:
- Figur 1: einen Querschnitt durch eine Linearführungseinheit mit zwei in gleicher Höhe angeordneten Führungsschienen für zwei einen Laufwagen tragende Führungswagen;
- Figur 2: einen Querschnitt durch eine gegenüber Figur 1 schmaler ausgeführte Linearführung, bei der zur Bau- raumeinsparung die beiden Führungsschienen in unter- schiedlichen Höhen angeordnet sind.

### Ausführliche Beschreibung der Zeichnung

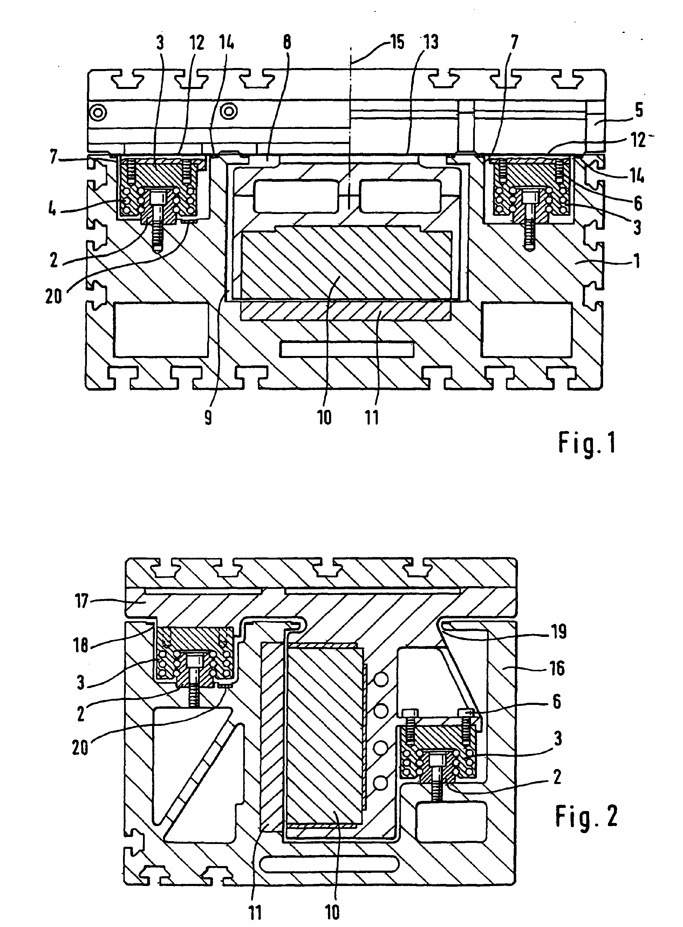

Eine in Figur 1 dargestellte erfindungsgemäße Linearführung besteht aus einem im Querschnitt etwa U-förmigen Führungsgehäuse 1, welches als Aluminiumprofilträger (Aluminiumstrangpreßprofil) ausgebildet ist. In diesem sind zwei parallele Führungsschienen 2 befestigt, an welchen sich jeweils mindestens ein Führungswagen 3 über Kugelumläufe 4 abstützt. Mit Hilfe der tragenden Kugeln dieser Kugelumläufe 4 sind die Führungswagen 3 längs der Führungsschiene 2 verfahrbar.

Die Führungswagen 3 dienen zur fahrbaren Lagerung eines Laufwagens 5, der an den Oberseiten der Führungswagen 3, die von den Führungsschienen 2 abgewandt sind, mit Schrauben 6 befestigt ist. Der Laufwagen 5 befindet sich an der Außenseite des Führungsgehäuses 1 und ragt durch zwei seitliche Längsöffnungen 7 und eine mittlere Längsöffnung 8 in das Führungsgehäuse 1 hinein, um mit den Führungswagen 3 verbunden werden zu können und um in einem mittleren Aufnahmeraum 9 des Führungsgehäuses 1 mit einem Motorprimärteil 10 eines Antriebs verbunden werden zu können. Dem Motorprimärteil 10 an dem Laufwagen 5 liegt ein Motorsekundärteil 11 gegenüber, das in dem Führungsgehäuse 1 befestigt ist. Diese beiden Teile bilden einen elektrischen Antriebsmotor für die Verschiebung des Laufwagens 5 in Längsrichtung des Führungsgehäuses 1.

Die seitlichen Längsöffnungen 7 sind außerhalb des Laufwagens 5 jeweils mit einem Abdeckband 12 verschlossen, während für die mittlere Längsöffnung 8 ein Abdeckband 13 vorgesehen ist. Die Abdeckbänder 12 und 13 sind an dem Führungsgehäuse 1 in Führungsschienenlängsrichtung fest angeordnet, sie sind durch schlitzförmige Öffnungen des Laufwagens 5 hindurchgeführt, so daß dieser während seiner Verschiebung in Längsrichtung des Führungsgehäuses 1 eine Relativbewegung zu den Abdeckbändern 12 und 13 ausführt. Mit Hilfe von Permanentmagnetstreifen 14, die in Längsnuten des Führungsgehäuses 1 angeordnet sind, werden die Abdeckbänder 12 und 13 außerhalb des Laufwagens 5 an dem Führungsgehäuse 1 gehalten. Die Linearführung gemäß Figur 1 ist zu einer senkrechten Mittelebene 15 symmetrisch ausgeführt.

Die Linearführung gemäß Figur 2 ist im Prinzip ebenso aufgebaut, jedoch sind hier das Motorprimärteil 10 und das Motorsekundärteil 11 innerhalb des Führungsgehäuses 16 nicht waagerecht liegend, sondern senkrecht stehend angeordnet. Dadurch ergibt sich eine Einsparung an Bauraum der Linearführung in Breitenrichtung. Das Führungsgehäuse 16 und der Laufwagen 17 sind hier nicht mehr symmetrisch ausgebildet und die in den Seitenbereichen des Führungsgehäuses 16 angeordneten Führungsschienen 2 mit den Führungswagen 3 befinden sich in unterschiedlichen Höhen. Bei dieser Ausführung sind nur zwei Längsöffnungen 18 und 19 des Gehäuses erforderlich, um die Verbindung der Führungswagen 3 mit dem im wesentlichen außerhalb des Führungsgehäuses 16 befindlichen Laufwagen 17 zu ermöglichen. Auch hier dienen zur Befestigung der einzelnen Bauteile aneinander, beispielsweise zur Befestigung der Führungswagen 3 an dem Laufwagen 17, Schrauben 6. Die beiden in den Figuren 1 und 2 dargestellten Linearführungen sind jeweils mit Längenmeßstreifen 20 versehen, welche sich im Profilinneren der Führungsgehäuse 1 und 16 befinden, parallel zu den Führungsschienen 2 verlaufen und den Führungswagen benachbart sind. Der Laufwagen der erfindungsgemäßen Linearführung, der ebenfalls aus einem Aluminiumstrangpreßprofil besteht und in dem das Motorprimärteil integriert ist, wird mittels mehrerer Kugelumlaufeinheiten geführt. In dem Laufwagen angeordnete Lüftungsschlitze führen die Verlustwärme des Motors an die Luft im Profilinneren ab, so daß die Erwärmung des Laufwagens so gering wie möglich gehalten wird.

Die Längsöffnungen des Trägerprofils werden durch nichtrostende, magnetische Stahlabdeckbänder verschlossen, um das Eindringen von Schmutz zu verhindern. Das jeweilige Abdeckband steht still und wird bei der Fahrt des Laufwagens durch diesen hindurchgeführt. Damit das Band am Strangpreßprofil optimal aufliegt und auch bei Über-Kopf-Einbau nicht von diesem abhebt, werden die Permanentmagnetstreifen, die das Stahlband auf die Trägerprofiloberfläche ziehen, in entsprechenden Nuten des Trägerprofils eingebracht.

Bei allen Konstruktionsvarianten können als Motoren Asynchronmotoren, Synchronmotoren oder Reluktanzmotoren und Gleichstrommotoren eingebaut werden. Das wesentliche Element der erfindungsgemäßen Lösung ist die Verbindung einer angetriebenen Linearführungseinheit mit einem gewichtsoptimierten, eigensteifen Trägerprofil, das als Aluminiumstrangpreßprofil ausgeführt ist, mit einem Linearmotor als Antrieb. Nicht nur der Motor, sondern auch ein Längenmeßsystem kann mit der Profilschienenführung im Inneren des Führungsgehäuses angeordnet sein, wobei alle Öffnungen mittels der Abdeckbänder verschlossen sind und somit ein optimaler Schmutzschutz aller Bauteile gewährleistet ist. Mit dieser Kombination lassen sich die Vorteile einer mit Zahnriemen angetriebenen Linearführung mit denen einer mit Kugelgewindetrieb angetriebenen Linearführung verbinden.

Die Vorteile der mit einem Zahnriemen angetriebenen Linearführung, wie hohe Geschwindigkeit und Dynamik, werden also mit den Vorteilen der Linearführung mit einem Kugelgewindetrieb, wie hohe Steifigkeit des Antriebs, hohe Positioniergenauigkeit und Wiederholgenauigkeit, kombiniert. Dabei ist der Preis einer solchen Linearführung mit dem einer Einheit vergleichbar, die mit einem Kugelgewindetrieb angetrieben wird. Durch die im Trägerprofil enthaltenen T-Nuten kann das Profil vom Anwender einfach auf handelsübliche Konstruktionsprofile geschraubt werden.

### Bezugszeichen

- 1: Führungsgehäuse
- 2: Führungsschiene
- 3: Führungswagen
- 4: Kugelumlauf
- 5: Laufwagen
- 6: Schraube
- 7: seitliche Längsöffnung
- 8: mittlere Längsöffnung
- 9: mittlerer Aufnahmeraum
- 10: Motorprimärteil
- 11: Motorsekundärteil
- 12: Abdeckband
- 13: Abdeckband
- 14: Permanentmagnetstreifen
- 15: Mittelebene
- 16: Fürungsgehäuse
- 17: Laufwagen
- 18: Längsöffnung
- 19: Längsöffnung
- 20: Längenmeßstreifen

## Patentansprüche

1. Linearführung mit einem als Profilträger ausgebildeten Führungsgehäuse (1, 16), welches ein Strangpreßprofilteil aus Aluminium ist, und mindestens einer darin befestigten Führungsschiene (2), an welcher einer oder mehrere Führungswagen (3) längsverschieblich abgestützt sind, die jeweils mit einem teilweise außerhalb des Gehäuses (1, 16) befindlichen und sich durch eine Längsöffnung (7, 8, 18, 19) in das Gehäuse (1, 16) hineinerstreckenden Laufwagen (5, 17) verbunden sind, wobei die Linearführung innerhalb des Gehäuses (1, 16) einen Antrieb für die Längsverschiebung des Führungswagens (3) und des Laufwagens (5, 17) aufweist, der als Elektromotor mit einem in dem Führungsgehäuse (1, 16) angeordneten Motorteil und einem in dem Laufwagen (5, 17) angeordneten Motorteil ausgebildet ist, **dadurch gekennzeichnet, daß** die Längsöffnung (7, 8, 18, 19) durch ein Abdeckband (12, 13) aus nichtrostendem magnetischen Stahl verschlossen ist, für welches Permanentmagnetstreifen (14) in Nuten des Führungsgehäuses (1, 16) eingebracht sind.

2. Linearführung nach Anspruch 1, **dadurch gekennzeichnet, daß** in dem Laufwagen (5, 17) das Motorprimärteil (10) und in dem Führungsgehäuse (1, 16) das Motorsekundärteil (11) angeordnet ist.

3. Linearführung nach Anspruch 1, **dadurch gekennzeichnet, daß** der Laufwagen (5, 17) ein Strangpreßprofilteil aus Aluminium ist.

4. Linearführung nach Anspruch 2, **dadurch gekennzeichnet, daß** die Verbindung des jeweiligen Führungswagens (3) mit dem Laufwagen (5, 17) sowie die Befestigung des Motorprimärteils (10) in dem Laufwagen (5, 17) und des Motorsekundärteils (11) in dem Führungsgehäuse (1, 16) mittels Schrauben (6) durchgeführt ist.

5. Linearführung nach Anspruch 1, **dadurch gekennzeichnet, daß** in dem Laufwagen (5, 17) Lüftungsschlitze zum Abführen der Verlustwärme des Elektromotors angeordnet sind.

6. Linearführung nach Anspruch 2, **dadurch gekennzeichnet, daß** der Elektromotor als nach dem Prinzip des Synchrommotors arbeitende Maschine ausgebildet ist, wobei dem Läufer das Motorprimärteil (10) und dem Ständer das Motorsekundärteil (11) entspricht.

7. Linearführung nach Anspruch 1, **dadurch gekennzeichnet, daß** die Führungsschiene (2), die Führungswagen (3) und ein diesen zugeordnetes Längenmeßsystem (20) sowie der Antrieb von dem Führungsgehäuse (1, 16) umschlossen und die Längsöffnung (7, 8, 18, 19) durch ein als Schmutzschutz wirkendes Abdeckband (12, 13) verschlossen sind.

8. Linearführung nach Anspruch 2, **dadurch gekennzeichnet, daß** die Verbindung des jeweiligen Führungswagens (3) mit dem Laufwagen (5, 17) sowie die Befestigung des Motorprimärteils (10) in dem Laufwagen (5, 17) und des Motorsekundärteils (11) in dem Führungsgehäuse (1, 16) mittels einer formschlüssigen Verbindung, wie Hinterschnitt, durch gezieltes Verformen des Strangpreßprofils durchgeführt ist.

## Claims

1. Linear guide, with a guide housing (1, 16) which is designed as a profile girder and which is an extruded profile part made from aluminium, having at least one guide rail (2) which is fastened therein and on which one or more guide carriages (3) are supported longitudinally displaceably, which are in each case connected to a running carriage (5, 17) located partially outside the housing (1, 16) and extending through a longitudinal orifice (7, 8, 18, 19) into the housing (1, 16), the linear guide having inside the housing (1, 16) a drive for the longitudinal displacement of the guide carriage (3) and of the running carriage (5, 17), which drive is designed as an electric motor with a motor part arranged in the guide housing (1, 16) and with a motor part arranged in the running carriage (5, 17), **characterized in that** the longitudinal orifice (7, 8, 18, 19) is closed by means of a covering band (12, 13) which is made from magnetic stainless steel and for which permanently magnetic strips (14) are introduced into grooves of the guide housing (1, 16).

2. Linear guide according to Claim 1, **characterized in that** the motor primary part (10) is arranged in the running carriage (5, 17) and the motor secondary part (11) is arranged in the guide housing (1, 16).

3. Linear guide according to Claim 1, **characterized in that** the running carriage (5, 17) is an extruded profile part made from aluminium.

4. Linear guide according to Claim 2, **characterized in that** the connection of the respective guide carriage (3) to the running carriage (5, 17) and the fastening of the motor primary part (10) in the running carriage (5, 17) and of the motor secondary part (11) in the guide housing (1, 16) are carried out by means of screws (6).

5. Linear guide according to Claim 1, **characterized in that** ventilation slots for discharging the lost heat of the electric motor are arranged in the running carriage (5, 17).

6. Linear guide according to Claim 2, **characterized in that** the electric motor is designed as a machine operating on the principle of the synchronous motor, the motor primary part (10) corresponding to the rotor and the motor secondary part (11) corresponding to the stator.

7. Linear guide according to Claim 1, **characterized in that** the guide rail (2), the guide carriages (3) and a length measurement system (20) assigned to these and also the drive are surrounded by the guide housing (1, 16), and the longitudinal orifice (7, 8, 18, 19) is closed by means of a covering band (12, 13) acting as dirt protection.

8. Linear guide according to Claim 2, **characterized in that** the connection of the respective guide carriage (3) to the running carriage (5, 17) and the fastening of the motor primary part (10) in the running carriage (5, 17) and of the motor secondary part (11) in the guide housing (1, 16) are carried out by means of a positive connection, such as an undercut, as a result of the directed deformation of the extruded profile.

## Revendications

1. Guide linéaire comprenant un boîtier de guidage (1, 16) réalisé sous forme de support profilé, qui est une pièce profilée filée en aluminium, et au moins un rail de guidage (2) fixé dans celui-ci, sur lequel sont supportés un ou plusieurs chariots de guidage (3) de manière déplaçable en longueur, lesquels sont connectés à chaque fois à un chariot de roulement (5, 17) situé en partie à l'extérieur du boîtier (1, 16) et s'étendant vers l'intérieur à travers une ouverture longitudinale (7, 8, 18, 19) dans le boîtier (1, 16), le guide linéaire à l'intérieur du boîtier (1, 16) présentant un entraînement pour le déplacement longitudinal du chariot de guidage (3) et du chariot de roulement (5, 17), qui est réalisé sous forme de moteur électrique avec une partie de moteur disposé dans le boîtier de guidage (1, 16) et une partie de moteur disposée dans le chariot de roulement (5, 17), **caractérisé en ce que** l'ouverture longitudinale (7, 8, 18, 19) est fermée par une bande de recouvrement (12, 13) en acier magnétique inoxydable, pour laquelle des rubans d'aimants permanents (14) sont introduits dans des rainures du boîtier de guidage (1, 16).

2. Guide linéaire selon la revendication 1, **caractérisé en ce que** la partie primaire du moteur (10) est disposée dans le chariot de roulement (5, 17) et la partie secondaire du moteur (11) est disposée dans le boîtier de guidage (1, 16).

3. Guide linéaire selon la revendication 1, **caractérisé en ce que** le chariot de roulement (5, 17) est une pièce profilée filée en aluminium.

4. Guide linéaire selon la revendication 2, **caractérisé en ce que** la connexion du chariot de guidage respectif (3) au chariot de roulement (5, 17) ainsi que la fixation de la partie primaire du moteur (10) dans le chariot de roulement (5, 17) et de la partie secondaire du moteur (11) dans le boîtier de guidage (1, 16) s'effectuent au moyen de vis (6).

5. Guide linéaire selon la revendication 1, **caractérisé en ce que** des fentes de ventilation sont disposées dans le chariot de roulement (5, 17) en vue d'évacuer la chaleur perdue du moteur électrique.

6. Guide linéaire selon la revendication 2, **caractérisé en ce que** le moteur électrique est réalisé sous forme de machine fonctionnant selon le principe du moteur synchrone, la partie primaire du moteur (10) correspondant au rotor et la partie secondaire du moteur (11) correspondant au stator.

7. Guide linéaire selon la revendication 1, **caractérisé en ce que** le rail de guidage (2), les chariots de guidage (3) et un système de mesure de longueur associé à ceux-ci (20) ainsi que l'entraînement du boîtier de guidage (1, 16) sont entourés par une bande de recouvrement (12, 13) servant de protection contre la poussière qui ferme également l'ouverture longitudinale (7, 8, 18, 19).

8. Guide linéaire selon la revendication 2, **caractérisé en ce que** la connexion du chariot de guidage respectif (3) au chariot de roulement (5, 17) ainsi que la fixation de la partie primaire du moteur (10) dans le chariot de roulement (5, 17) et de la partie secondaire du moteur (11) dans le boîtier de guidage (1, 16) s'effectuent au moyen d'une connexion par engagement positif, telle qu'une contre-dépouille, par déformation spécifique du profilé filé.
